# EUROPEAN PATENT APPLICATION

(11) **EP 1 519 551 A1**
(43) Date of publication of application: **30.03.2005**
(21) Application number: 04255253.9
(22) Date of filing: 31.08.2004
(51) Int. Cl.: H04M 3/523, H04M 3/51

(54) **Method and apparatus for business time computation in a resource allocation system**

(30) Priority: 26.09.2003 US 673115
(71) Applicant: Avaya Technology Corp., Basking Ridge, NJ 07920 (US)
(72) Inventor: Flockhart, Andrew D., Thornton, Colorado 80241 (US); Steiner, Robert C., Broomfield, Colorado 80020 (US); Roybal, Larry J., Westminster, Colorado 80234 (US)
(74) Representative: Williams, David John

(57) **Abstract**

The present invention provides a method and apparatus for resource allocation in a system which includes work items which are to be completed in both business time and real time. Work items are placed in a delta queue which has a calendar associated therewith indicating business time and non-business time for resources associated with the delta queue. When the calendar associated with the delta queue enters into a non-business time, a scheduler pushes an item at the head of the delta queue which corresponds to the amount of non-business time. Work items in the delta queue are thus delayed by the appropriate amount of time corresponding to the non-business time.

## Description

### FIELD OF THE INVENTION

The present invention is directed to the scheduling of work items in a resource allocation system. In particular, the present invention is directed to scheduling service time commitments for servicing of work items in a business time domain and a real time domain.

### BACKGROUND OF THE INVENTION

In present day resource allocation systems, resource selection and allocation algorithms are commonly employed to perform calculations related to timing of operations and the required time, or service time, to complete operations. These calculations are performed, for example, when a telephone call is received at a customer service center. When such a call is received, it is typically assigned to a pool of resources, also referred to as a service, responsible for answering telephone calls. Furthermore, such calls generally have a target service time (referred to as a service time or a commitment time), such as three minutes for example, which is the time for an agent to answer the call. This service time is determined by decision makers associated with the resource, and entered into the resource allocation system. Service times are useful, for example, to help ensure a customer is not waiting to speak to an agent for a long period of time, which may reduce customer satisfaction.

Resource allocation systems may also include a number of features which operate to predict future status of the work queues and the items therein to identify likely resource shortfalls or surpluses which may occur in the future. For example, if an unusually large number of telephone calls are received at a call center, with each call having a service time of three minutes, a resource allocation system using prediction features, may alert supervisory personnel or software systems of a potential problem of not enough agents being available to service the calls which have service times that expire in the future. These supervisory personnel or software systems may then take appropriate steps to address the problem, such as adding additional resources to service the calls. Some resource allocation systems may also include features which, in such situations, transfer calls to other call centers or divert incoming calls to other call centers in order to help prevent a shortage of resources.

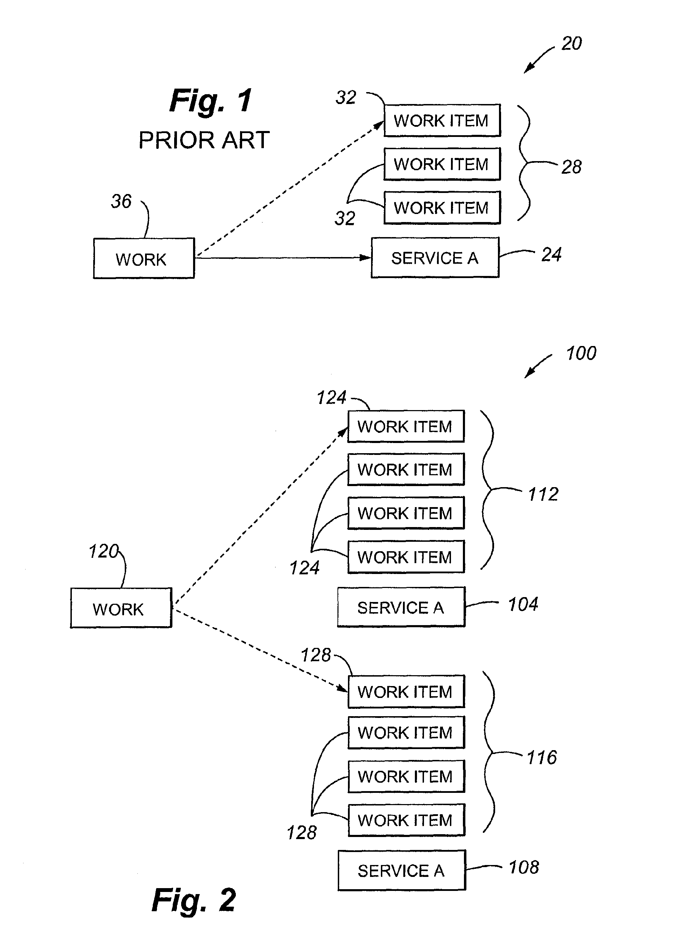

A block diagram of such a system is illustrated in Fig. 1. The system 20 of Fig. 1 includes a service 24, which has a queue 28 containing a number of work items 32. Work 36 comes into the system and is assigned to the service 24, and a work item 32 associated with the work 36 is placed into the queue 28 for processing and servicing. When a work item 32 is placed into the queue 28, it is also given a service time, indicating the time in which the work should be serviced. For example, if the resource allocation system 20 is associated with a call center, and each work item 32 is associated with a telephone call, each work item may have a service time of three minutes, meaning that the call associated with the work item 32 should be answered by an agent in the service 24 within this time period.

As mentioned above, such resource allocation systems 20 commonly have features which are capable of monitoring and predicting potential problem situations before they occur, thus helping to avoid work items 32 which are in the queue 28 longer than their service time. These features are implemented through a number of algorithms which assess the work queue and work items on a continuous or periodic basis. Over time, such algorithms have become increasingly complex, and a resource allocation system 20 may have hundreds of such algorithms to alert personnel to a number of situations in order to facilitate the efficient use of resources through forecasting of required resources.

Increasingly, resource pools are also being used to respond to other requests, such as electronic mail enquiries. When an electronic mail is received, it may also have service time. For example, a service time for responding to an electronic mail may be one business day. Since agents in a resource pool typically work preset business hours, such as 9 to 5, Monday to Friday, the resource allocation system must also be sensitive to the type of work items and service times for those work items which may span over a time period in which a resource is not available to service the work item. For example, if a telephone call is received at a resource pool, it is important that the call be received and responded to within a predetermined time period, regardless of when the call was received. However, if an email is received, it is possible that some or all of the resource pool may leave, and return and respond to the email on the following business day, and still service the email prior to the expiration of the service time. Many present day systems compensate for this non-business time by implementing algorithms in an ad hoc fashion to compensate for non-business time which may be present before the expiration of the service time for a work item. Such ad hoc implementation of algorithms is very labor intensive for the development of a system which is used for servicing such work items. Furthermore, ad hoc implementation of algorithms is more likely to lead to implementation errors, resulting in bugs in the resource allocation system. Accordingly, it would be beneficial to have a resource allocation system which compensates for the type of service time that different types of work items may have, being business time or real time, and does not require significant modifications to existing resource allocation algorithms.

Furthermore, some present day resource allocation systems accommodate for business time by searching a business calender and adding up durations when a resource is in service. Since business time is not continuous, the calender is searched and times computed by adding them up. Since a single resource allocation could involve hundreds of scenario evaluations, the number of searches becomes one of the limiting factors in throughput. Another consequence of business time is that the algorithms must be modified to know when the business is open (such as a non-working weekend), so that calculations over the non-working weekend are correct. Also, work coming in during non-business hours is handled differently, so other parts of the system must be modified, making real time and business time resource management different, and further reducing the performance of the system. Accordingly, it would be beneficial to have a system in which real time and business time resource management is handled in a similar fashion without significant impact on system performance.

### SUMMARY OF THE INVENTION

The present invention is directed to solving these and other problems and disadvantages of the prior art. According to the present invention, a method and apparatus are provided for resource allocation in a system which includes work items which are to be serviced in both business time and real time. Work items which are to be serviced in business time are placed in a queue which has a calendar associated therewith indicating business time and non-business time for resources associated with the delta queue. When the calendar associated with the queue enters into a non-business time, a scheduler stops a clock associated with the queue for the period of the non-business time. Work items in the queue are thus delayed by the appropriate amount of time corresponding to the non-business time.

In accordance with one aspect of the present invention, a method for allocating resources is provided, including the steps of providing a resource allocation system comprising at least one queue of work items, each of the work items having an associated service time, and at least one resource to service the work items; placing a time delay corresponding to a non-business time period in at least one position of the queue; and allocating resources associated with the queue according to predetermined algorithms. In one embodiment, a calendar is provided which is associated with the queue and includes entries corresponding to business time and non-business time. In this embodiment, placing the time delay in the queue includes accessing the calendar, determining when a non-business time period begins, and placing a duration of the non-business time period in a first position in the queue when the non-business time begins. The first position of the queue, for one embodiment, is the head of the queue. Furthermore, in one embodiment, the queue is a delta queue. The resource allocation system, in another embodiment, includes a plurality of queues of work items, each of the queues having an associated calendar indicating business time and non-business time periods. Predetermined resource allocation algorithms perform resource allocation for each of said plurality of queues independently of the calendar associated with the queues.

A resource status associated with a first queue of the plurality of queues may be displayed at a user interface, the resource status being displayed in relation to a real time clock included in the resource allocation system. The resource status to be displayed is obtained by determining the service time for work items in the first queue, selecting the calendar associated with the first queue, indexing the calendar into a table having a real time index, and computing the service times into a time interval according to the table. The indexing of the calendar into a table having a real time index includes, in one embodiment, selecting a minimum time interval, determining the calendar start time, subtracting the real time from the calendar start time, and taking the modulus of the calendar time by the minimum time interval. The amount of time prior to the expiration of the service time is then determined as the remainder of the modulus operation.

In accordance with another aspect embodiment of the present invention, a resource allocation system is provided. The resource allocation system includes a scheduler operable to receive work items, determine a service time for the work items, place the work items into one of a plurality of queues, and allocate resources for each of the queues according to predetermined resource allocation algorithms. The resource allocation system also includes a timer operable to time the duration of items in the plurality of queues, and a plurality of calendars corresponding to the plurality of queues. Each queue in the resource allocation system has an associated calendar, and each calendar has entries corresponding to business time and non-business time. The scheduler is operable to monitor each of the calendars and, upon the start of a non-business time for a first calendar, place a time delay corresponding to the length of the non-business time into the queue associated with the first calendar. In one embodiment, the queues are delta queues, and the length of the non-business time is placed at the head of the delta queue.

The resource allocation system, in one embodiment, has a user interface operable to display information related to current status of the plurality of queues. A conversion system is operable to convert real time to business time for display on the user interface. The conversion system is operable to determine the service time for work items in the plurality of queues, select the calendar associated with each of the plurality of queues, index the calendars into a table having a real time index, and compute the service times into a time interval according to said table. The index is generated by selecting a minimum time interval, determining the calendar start time, subtracting the real time from the calendar start time, and taking the modulus of the calendar time by the minimum time interval. The service time may then be computed according to a remainder of the modulus operation.

The scheduler, in one embodiment, is operable to determine which of the plurality of queues into which a work item should be placed, each of the queues having an associated calendar including business time and non-business time periods; and place the work item at the tail of one of said plurality of queues based on the determination. The predetermined algorithms perform resource allocation within the scheduler for each of the plurality of queues independently of the calendar associated with the queues.

In accordance with yet another aspect of the present invention, a computational component for performing a method is provided, the method including the steps of receiving a work item at a resource allocation system, determining a service time for the work item, placing the work item into a queue, placing a time delay corresponding to a non-business time period into the queue, and allocating resources associated with the queue according to predetermined algorithms. In one embodiment, placing the time delay in the queue includes accessing a business time calendar which includes information corresponding to business time and non-business time, determining when a non-business time period begins, and placing a duration of the non-business time period into the queue when said non-business time begins. In one embodiment, placing a work item into a queue includes determining which of a plurality of queues into which the work item should be placed, each of the queues having an associated calendar including information related to business time and non-business time periods, and placing the work item in one of the plurality of queues based on the determination. The predetermined algorithms may perform resource allocation of each of the plurality of queues independently of the calendar associated with the queues.

These and other advantages will be apparent from the disclosure of the invention(s) contained herein.

The above-described embodiments and configurations are neither complete nor exhaustive. As will be appreciated, other embodiments of the invention are possible utilizing, alone or in combination, one or more of the features set forth above or described in detail below.

### BRIEF DESCRIPTION OF THE DRAWINGS

**Fig. 1** is a block diagram representation of a resource allocation system;
**Fig. 2** is a block diagram representation of a resource allocation system including more than one service and queues associated with each service, according to one embodiment of the present invention;
**Fig. 3** is a block diagram representation of a business time calendar according to one embodiment of the present invention;
**Fig. 4** is a block diagram representation of a delta queue illustrating the insertion of a non-business-time entry at the head of the delta queue for one embodiment of the present invention;
**Fig. 5** is a block diagram representation of a scheduler for one embodiment of the present invention;
**Fig. 6** is a table illustrating an index between real time and calendar time for one embodiment of the present invention; and
**Fig. 7** is a flow chart diagram illustrating the operational steps for calculating a business time from a real time for a calendar.

### DETAILED DESCRIPTION

With reference now to Fig. 2, a block diagram of a resource allocation system 100 of one embodiment of the present invention is described. The resource allocation system 100 includes two services, service A 104 and service B 108. Service A 104 has an associated queue 112, and service B 108 has an associated queue 116. Work 120 enters the system 100, and is routed to the appropriate service. For example, service A 104 may receive electronic mail, and service B 108 may receive telephone calls. The queue 112 for service A 104 contains a number of work items 124, and similarly, the queue 116 for service B 108 contains a number of work items 128. Work items 124 are associated with, in this embodiment, electronic mail, and the system 100 computes a service time for the servicing of the electronic mail. The service time may be, for example, one business day. One business day for the resources in service A 104 may be eight business hours, resulting in a service time for work items in queue 112 of eight business hours or less. Work items 128 are associated with, in this embodiment, telephone calls, and the system 100 computes a service time for the servicing of the telephone calls. The service time may be, for example, three minutes (180 seconds). As will be understood, the service time for telephone calls must be done in real time, as a person making the telephone call may become dissatisfied if the call is not answered within a certain time period. Accordingly, all items in the queue 116 associated with service B 108 must be completed in real time, and not business time.

In one embodiment, the calculations for time remaining for each work item in queue 112 are performed according to the amount of time remaining on the business clock. Thus, if an electronic mail was received into the queue 112 on a Friday at 4:00 PM, and the business is open Monday-Friday, 9:00 AM to 5:00 PM, the service time for the work item 124 associated with the electronic mail will be Monday at 4:00 PM. Thus, the amount of real time which would elapse prior to the service time expiring would be 72 hours.

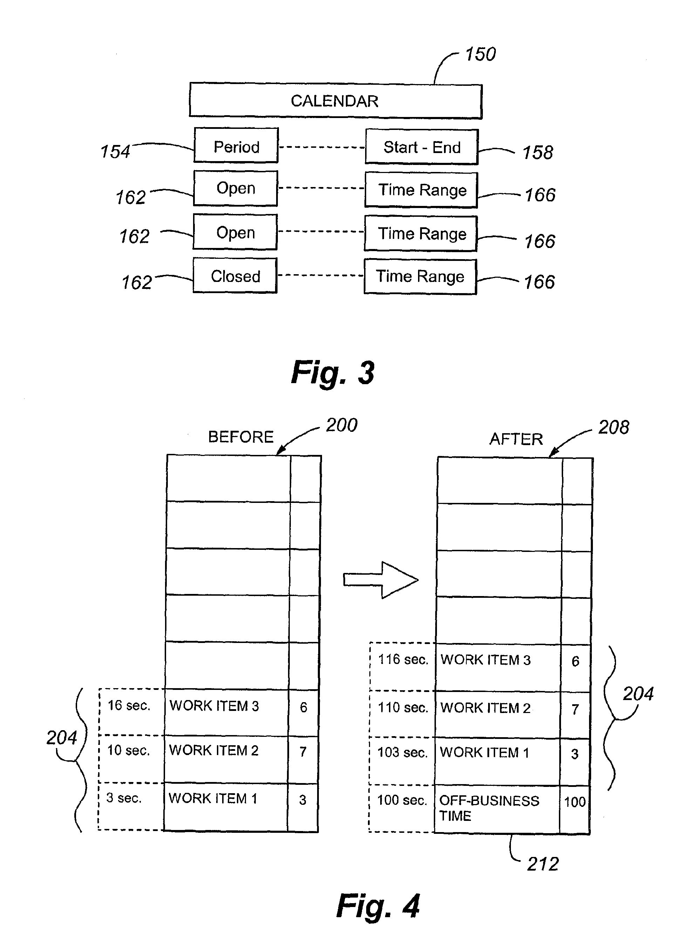

In order to employ resource allocation algorithms which the system can use in resource allocation, one embodiment of the present invention employs a calendar which is used to determine the amount of real time and amount of business time for a work item. Referring to Fig. 3, a block diagram of a calendar 150 is now described. The calendar 150 includes period information 154, which has start-end information 158 noting the entire time period the calendar 150. The start-end information may be, for example, the beginning and end dates for a fiscal year for a company. The start-end information 158 may span any desired time period, such as a longer time period of several years, or a shorter time period such as a week or a month. The calendar 150 also includes time period information 162 which has associated time range information 166. The time period information 162 includes information which indicates whether a business is open or closed, and the time range information 166 includes information indicating the time range for each time period information 162. As illustrated in Fig. 3, the calendar 150 includes three time period information 162 entries. It will be understood that any number of time period information 162 entries may be present. Furthermore, the calendar 150 may have a default business time, with only exceptions included which indicate if the business is open or closed. For example, a default calendar may have a business being open from 9:00 AM to 5:00 PM on Mondays through Fridays. Additional time period information 162 may then be entered to indicate, for example, a holiday where the business is not open on the holiday, or has reduced hours on the holiday. A number of different alternatives exist for the entry of calendar information, including different default calendars, entry of recurring information, and changing of hours, which will be readily apparent to one of skill in the art. The calendar 150 is stored in the system using any known method of information storage.

As is known in the art, one method for scheduling work items is through the use of a delta queue. When work items are received in the resource allocation system, a service time is associated with the work item. A timer, or clock, is associated with the work items, and when the timer expires the service time has elapsed. When the timer expires, referred to as a timeout, the resource allocation system takes certain steps in order to attempt to rectify the situation. A delta queue is one method which is used to store the times at which work items in a queue will timeout. The work items are stored in time order, with the work item nearest the front of the queue having the soonest timeout. Instead of storing the absolute time at which each work item will timeout, the times are stored as a series of "deltas" (i.e. time differences). The first entry in the delta queue records the time at which the corresponding work item will timeout relative to the current time, and each subsequent entry in the delta queue records the timeout of the corresponding work item relative to the timeout of the previous work item on the queue. One reason for using time differences rather than absolute times to represent the contents of a delta queue is that it is more efficient to update the work items on the delta queue as time passes. The timeout of one work item relative to another does not change as time elapses. Only the delta for the first work item on the delta queue is relative to the current time, and all the other deltas are relative to the delta for the previous entry in the queue. Thus, as time elapses, the only change that needs to be made to the delta queue is to decrease the delta for the first work item in the queue. When this delta reaches zero, the timeout for the first item has timed out, which triggers predetermined events within the resource allocation system, such as putting the system in a critical state. As work items are completed, they are removed from the delta queue. The next entry in the queue becomes the new head of the queue and its delta will automatically be relative to the current time because it was previously relative to the work item which was removed from the delta queue.

Referring now to Fig. 4, a block diagram illustration of scheduling work items is now described. In this embodiment, a delta queue 200 receives work items 204, including work item 1, work item 2, and work item 3. Work item 1, in this example, is at the head of the delta queue 200, and has a timeout of three seconds. Work item 2 has a delta of 7, giving work item 2 a total of 10 seconds before timeout. Similarly, work item 3 has a delta of 6, giving work item 3 a total of 16 seconds before timeout. At this time, the resource associated with the delta queue 200 enters a non-business time. For the purposes of this example the non-business time is 100 seconds. The timer is stopped by entering the appropriate amount of non-business time to the head of the a delta queue, resulting in a new delta queue 208, which has the non-business time 212 entered at the head of the new delta queue 208. Accordingly, in this example, following the entry of the non-business time 212 at the head of the new delta queue 208, the timeout of each of the work items 204 are pushed back by the amount of non-business time 212. Thus, work item 1 has a delta of three, giving work item 1 a total of 103 seconds before timeout. Work item 2 continues to have a delta of 7, resulting in 110 seconds before timeout. Work item 3 continues to have a delta of 6, resulting in 116 seconds before timeout. Thus, by adding the non-business time 212 to the head of the delta queue 200, the timer for all of the work items 204 on the delta queue 200 is effectively stopped for the duration of the non-business time. In this fashion, the existing algorithms for resource management which are associated with the resource allocation system remain unchanged.

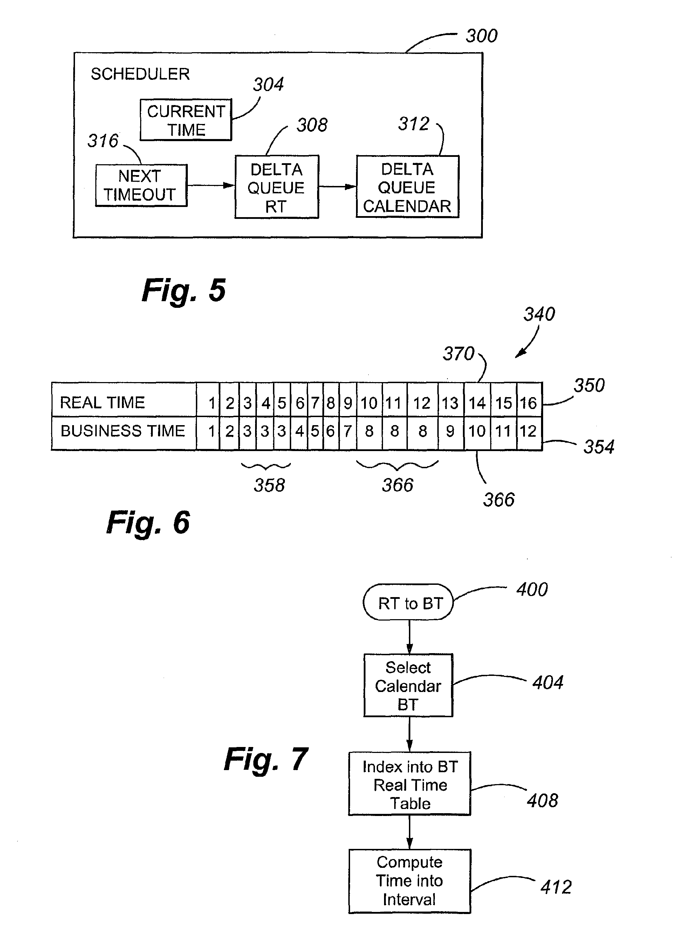

The non-business time is entered into the delta queue by a scheduler which references the calendar to determine when the non-business time is to be entered into the delta queue. Referring now to Fig. 5, a block diagram illustration of a scheduler 300, for one embodiment of the present invention, is described. The scheduler 300 is operable to manage timeouts in both real time and business time. The scheduler includes a current time 304, which is associated with a system clock. The scheduler also includes a real time delta queue 308, and a first calendar delta queue 312. The scheduler may contain additional delta queues, with each calendar having an associated delta queue. The scheduler has a next timeout 316, which is a pointer that is kept to the next timeout, which is the earliest item on all the queues.

Referring now to Fig. 6, a table illustrating the conversion from real time to business time is now described. In one embodiment, the scheduler creates a table 340 which indexes a calendar to real time. The table 340 includes real time entries 350, and business time entries 354 for the appropriate calendar. In the example illustrated in Fig. 6, the calendar for the business time entries 354 includes a first non-business time period 358, and a second non-business time period 362. The first and second non-business time periods 358, 362, are each three real time units in duration. The units may be any length of time, such as one minute, ten minutes, or 30 minutes, for example. It will be understood that the table illustrated in Fig. 6 is an illustration for discussion purposes only, and that any calendar may be indexed with real time using such a table. In order to determine the real time at which certain calendar events will occur, the appropriate position of the business time entries 354 is located, and the corresponding real time entry 350 is obtained. For example, if the units in the table 340 correspond to 30 minute time intervals, and a work item is to be completed in five business hours, the corresponding entry in the business time entries 354 would be 10. The corresponding entry in the real time entries 350 would be 14, which accounts for the first and second non-business time periods 358, 362. The work item is entered onto the appropriate delta queue which is associated with the calendar, and all of the algorithms in the resource allocation system continue to operate on the delta queue with no additional modification required.

The table 340 illustrated in Fig. 6 is one of many ways to index and map between real time and business time. As will be understood, creating such a table for each calendar in a resource allocation system may require a relatively large amount of system resources, particularly if the time intervals are relatively small and if the calendar covers an extended period of time. In order to more efficiently use system resources, in one embodiment, the resource allocation system uses an algorithm to convert from real time to business time, and business time to real time. The operational steps for performing the algorithm for this embodiment are illustrated in the flow chart diagram of Fig. 7. The real time to business time computation initiates at block 400. At block 404, the scheduler selects the calendar for business time which is to be used in the calculation. The business time calendar, as described above, may be one of many calendars stored within the resource allocation system. Next, at block 408, an index is created into a business time to real time table. In one embodiment, a minimum interval is selected, which indicates the granularity of the calendars. For example, one minute time intervals may be selected, resulting in a business time calendar which may have scheduled off-time intervals with one minute granularity. A calendar time is calculated by determining the calendar start time, and subtracting from real time. The index is then determined by taking the modulus of the calendar time by the minimum interval. After determining the index, a time interval may be computed, according to block 412. The time interval may be computed by determining a business time remainder, which is the calendar time less the business time at the appropriate index in the business time real time table. The business time may then be computed as the sum of the business time index and the business time remainder. As mentioned above, the conversion from business time to real time is necessary for the user interface. The resource management algorithms operate using the delta queues, and the scheduler accounts for the non-business-time by inserting the appropriate off-time at the head of the delta queue for a particular calendar. If a business time to real time conversion is desired, a binary search of the business time real time table may be performed to determine the real time associated with a particular business time. In the case that the real time corresponds to a non-business time, a range may be given, indicating the beginning or end of the non-business time period, or the beginning or end of the non-business time may be selected for display.

The foregoing discussion of the invention has been presented for purposes of illustration and description. Further, the description is not intended to limit the invention to the form disclosed herein. Consequently, variations and modifications commensurate with the above teachings, within the skill and knowledge of the relevant art, are within the scope of the present invention. The embodiments described hereinabove are further intended to explain the best mode presently known of practicing the invention and to enable others skilled in the art to utilize the invention in such or in other embodiments with various modifications required by their particular application or use of the invention. It is intended that the appended claims be construed to include the alternative embodiments to the extent permitted by the prior art.

## Claims

1. A method for allocating resources, comprising:
providing a resource allocation system comprising at least one queue of work items, each of the work items having an associated service time, and at least one resource to service the work items;
placing a time delay corresponding to a non-business time period in at least one position of said queue; and
allocating resources associated with said queue according to predetermined algorithms.

2. The method of Claim 1, wherein said placing step comprises:
accessing a calendar associated with said queue, said calendar including entries corresponding to business time and non-business time;
determining when a non-business time period begins; and
placing a duration of said non-business time period in a first position in said queue when said non-business time begins.

3. The method of claim 2, wherein said first position is at a tail of said queue.

4. The method of Claim 1, wherein said resource allocation system includes a plurality of queues of work items, each of said plurality of queues having an associated calendar indicating business time and non-business time periods, wherein said first position is at the head of said queue, and wherein said predetermined algorithms perform resource allocation for each of said plurality of queues independently of the calendar associated with the queues.

5. The method of Claim 4, further comprising:
displaying, at a user interface, a resource status associated with a first queue of said plurality of queues, the resource status being displayed in relation to a real time clock included in the resource allocation system.

6. The method of Claim 5, wherein said displaying step comprises:
determining the service time for work items in said first queue;
selecting the calendar associated with said first queue;
indexing said calendar into a table having a real time index; and
computing said time commitments into a time interval according to said table.

7. The method of Claim 6, wherein said indexing step comprises:
selecting a minimum time interval;
determining the calendar start time;
subtracting from real time from the calendar start time; and
taking the modulus of the calendar time by the minimum time interval.

8. The method of Claim 7, wherein said computing step comprises:
determining the remainder of the modulus operation of said taking the modulus step.

9. A resource allocation system, comprising:
a scheduler operable to receive work items, determine a service time for said work items, place said work items into one of a plurality of queues, and allocate resources for each of said queues according to predetermined resource allocation algorithms;
a timer operable to time the duration of items in said plurality of queues; and
a plurality of calendars corresponding to said plurality of queues, wherein each queue has an associated calendar, wherein each calendar has entries corresponding to business time and non-business time, and wherein said scheduler is operable to monitor each of said calendars and, upon the start of a non-business time for a first calendar, place a time delay corresponding to the length of said non-business time into the queue associated with the first calendar.

10. The resource allocation system of Claim 9, further comprising:
a user interface operable to display information related to current status of said plurality of queues; and
a conversion system operable to convert real time to business time for display on said user interface, wherein said conversion system is operable to:
determine the service time for work items in said plurality of queues;
select the calendar associated with each of said plurality of queues;
index said calendars into a table having a real time index; and
compute said service times into a time interval according to said table.

11. The resource allocation system of Claim 10, wherein said conversion system creates said index according to the following steps:
selecting a minimum time interval;
determining the calendar start time;
subtracting from real time from the calendar start time; and
taking the modulus of the calendar time by the minimum time interval and wherein said service time is computed according to a remainder of the modulus operation of said taking the modulus step.

12. The resource allocation system of Claim 9, wherein said scheduler is operable to:
access a business time calendar which includes information corresponding to business time and non-business time;
determine when a non-business time period begins; and
place a duration of said non-business time period into said queue when said non-business time begins.

13. The resource allocation system of Claim 9, wherein said scheduler is operable to:
determine which of said plurality of queues into which said work item should be placed, each of said queues having an associated calendar including business time and non-business time periods; and
place said work item at the tail of one of said plurality of queues based on said determination.

14. The resource allocation system of Claim 9, wherein said predetermined algorithms perform resource allocation of each of said plurality of queues independently of the calendar associated with the queues.
